# EUROPÄISCHE PATENTSCHRIFT

(11) **EP 0 833 557 B1**
(45) Veröffentlichungstag und Bekanntmachung des Hinweises auf die Patenterteilung: **07.04.1999**
(21) Anmeldenummer: 96920689.5
(22) Anmeldetag: 19.06.1996
(51) Int. Cl.: A01C 7/08, A01C 7/12

(54) **SÄVORRICHTUNG MIT MODULAREM DOSIERGERÄT**
SEEDING DEVICE WITH A MODULAR DOSING DEVICE
DISPOSITIF DE SEMENCE AVEC DOSEUR MODULAIRE

(30) Priorität: 20.06.1995 DE 19522229
(43) Veröffentlichungstag der Anmeldung: 08.04.1998
(73) Patentinhaber: Horsch Maschinen GmbH, 92421 Schwandorf (DE)
(72) Erfinder: HORSCH, Michael, D-92421 Schwandorf (DE)
(74) Vertreter: Wasmeier, Alfons, Dipl.-Ing.
(86) Internationale Anmeldenummer: DE9601079
(87) Internationale Veröffentlichungsnummer: WO9700603

(56) Entgegenhaltungen:
- EP-A- 0 218 813
- EP-A- 0 259 633
- WO-A-92/12619
- US-A- 3 606 965
- US-A- 5 189 965

## Beschreibung

Die Erfindung betrifft eine Sävorrichtung nach dem Oberbegriff des Anspruches 1.

Es sind Dosiergeräte (der Firma Flexi-Coil) bekannt, bei denen Zellenräder für Grob-, Fein- und Extrafein-Zuteilung für unterschiedliche Arten und Körnungen von Saatgut und Düngemitteln in Granulatform zur Verfügung stehen. Derartige Dosiergeräte werden zum Wechseln der Räder für unterschiedliche Körnungen gegeneinander ausgetauscht.

Des weiteren sind Dosiergeräte (der Firma Accord) mit zentralem Zellenrad für Saatgut bekannt, bei denen durch das Zellenrad das Saatgut exakt volumenmäßig abgemessen und z.B. durch eine Gummilippe abgedichtet wird. Die Saatgutmenge ist dabei durch veränderbare Zellenbreite stufenlos einstellbar. Damit wird eine exakt wegabhängige und volumenmäßige Dosierung erreicht.

Zur Erzielung einer exakten Aussaat sind ferner Sämaschinen mit Präzisionsrädern bekannt, die einzeln in je einem Sägehäuse gelagert sind. Bodenklappen ermöglichen eine Einstellung in vier Positionen zur Anpassung an verschiedene Samengrößen.

Ferner ist aus der EP-PS 0 259 633 ein Dosiergerät zum volumetrischen Ausbringen von Saatgut oder Dünger in Granulatform bekannt, das mit einem Zellenrad arbeitet, dem eine Abstreifervorrichtung zugeordnet ist. Das vom Zellenrad dosiert abgegebene Granulat wird durch Druckluftführung über Führungsschächte bzw. Einzelkanäle in die Abgabeleitungen mit erhöhter Geschwindigkeit transportiert.

Aus US 36 06 965 ist eine Vorrichtung zum exakten Verteilen von abgemessenen Mengen eines pulverförmigen Materials mit Hilfe von in Kammern unterteilten, rotierenden, zylindrischen Trommeln bekannt, deren offene Umfangsflächen mit Sperrschiebern zusammenwirken, durch die die vom Vorratsbehälter in die Kammern der Trommeln abgegebenen Materialmengen einstellbar sind. Die Anzahl von parallelen Trommeln ist bestimmt durch die Anzahl von auszubringenden unterschiedlichen Materialien. Diese unterschiedlichen Materialien fallen von den Trommeln auf eine Drehplatte und werden von dort auf den Erdboden abgegeben.

Die PCT/WO 92/12619 betrifft eine Zumeßvorrichtung für Sämaschinen, um körniges Saatgut genau dosiert abzugeben. Sie besteht aus parallel zueinander auf einer gemeinsamen Welle angeordneten Zellenrädern, die in einem Vorratsbehälter angeordnet sind und zusammen mit der Welle als Einheit aus dem Behälter entfernt werden können. Zum Ausbringen des Saatgutes wird ein Druckluftstrom über das Zellenrad geführt, der das Saatgut an einen Auslaß transportiert und abgibt. Durch eine Verengung des Abgabekanales wird die Geschwindigkeit der Druckluft entsprechend erhöht.

Aufgabe der Erfindung ist es, bei pneumatischen Sämaschinen das Dosieren von granulatförmigem Saatgut bzw. bei Düngerstreuern das Dosieren von granulatförmigem Dünger und dergl. individuell und sehr exakt zu ermöglichen, und ein modulares Dosiergerät für vielseitige Einsatzzwecke zu schaffen.

Gemäß der Erfindung wird dies mit den Merkmalen des Kennzeichens des Anspruches 1 erreicht. Weitere Ausgestaltungen der Erfindung sind Gegenstand der Unteransprüche.

Mit einem derartigen modularen Dosiersystem ist das Dosieren von Saatgut, wie Getreide, Grassamen, Raps, Sonnenblumen, Soja, Mais usw., ferner von granulatförmigem Dünger und anderen chemischen Granulaten universell und sehr exakt möglich. Das Dosiersystem ist ausschließlich für pneumatische Sämaschinen mit einem oder mit mehreren zentralen Saatguttanks und Saatgutverteilern bestimmt, die in der Regel über den einzelnen Säaggregaten angeordnet sind. Diese Dosiergeräte dosieren Saatgut z.B. in einen unter Druckluft stehenden Schlauch, der das Saatgut zu den Verteilertürmen transportiert, die über den Säaggregaten angebracht sind. Die Einführung des wegeabhängigen, dosierten Saatguts oder Düngegranulats erfolgt entweder durch Injektoren in Form von Düsen, Diffusoren oder dergl., oder nach dem Drucktank- oder Zellenradschleusenprinzip.

Die Entwicklung der Sämaschinen geht dahin, daß zusätzlich zu dem Saatgut mindestens eine oder mehrere weitere Komponenten, z.B. granulatförmiger Dünger, chemische Granulate und dergl. gleichzeitig mitgeführt werden. Derartige Sämaschinen können eine Breite in der Größenordnung bis 18 m haben. Diese übergroßen Breiten erfordern ein Zentraltanksystem mit pneumatischem Saatgut- bzw. Düngertransport und pneumatischer Saatgut- bzw. Düngerverteilung sowie zentraler Dosierung über ein modulares Dosiersystem. Ferner ermöglichen neue Systeme des stufenlosen Antriebes, z.B. über Elektromotoren oder Hydraulikmotoren, das direkte Antreiben von Dosiergeräten und mit Hilfe eines Computers auch ein teilflächenbezogenes Zuordnen von vorher programmierten unterschiedlichen Mengen an Saatgut, Dünger und dergl., wie es über neuartige Satellitensteuerung (GPS oder DGPS) für große landwirtschaftliche Flächen in Einsatz gelangt bzw. gelangen wird.

Für derartige in die Zukunft gerichtete Anwendungsfälle mit Maschinen extrem großer Arbeitsbreiten scheiden Säkästen in der Breite der Arbeitsbreite aus; stattdessen sind zentrale Säkästen bzw. zentrale Sätanks erforderlich, für die die modularen Dosiersysteme eingesetzt werden. Für derartige Einsätze können herkömmliche Dosiersysteme mit mechanischem Kardanantrieb, Getriebe usw. nicht mehr verwendet werden, da sie zu komplex sind. Stattdessen sind stufenlose Antriebe erforderlich, ferner sind zum Betreiben dieser Dosiergeräte bzw. -systeme Rechnersteuerungen notwendig. Auch ist eine universelle Verwendbarkeit der Dosiergeräte von entscheidender Bedeutung, wobei das modulare System so ausgebildet ist, daß die Welle eines Dosiergerätes nur einmal an beiden Enden gelagert ist, daß Antrieb und Lagerung selbständige Einheiten sind, die lediglich aufgesteckt werden, und daß das Dosiergehäuse absolut symmetrisch ist und von links oder von rechts angetrieben werden kann. Die verwendeten modularen Dosiergeräte nach der Erfindung sind axial auf beiden Seiten symmetrisch, soweit es den Antrieb und die Lagerung wie auch die Zusammenstellung des Dosiergerätes betrifft. Ferner ist die Befestigung des jeweiligen Dosiergerätes oben und unten symmetrisch. Die Antriebseinheiten sind so ausgelegt, daß sie mittels Schnellverschluß beidseitig auf das Dosiergehäuse aufgesteckt werden können. Dies gilt auch für die Lagereinheit auf der in bezug auf die Antriebseinheit gegenüberliegenden Seite. Antriebseinheit und Lagereinheit weisen jeweils eine Dichtung auf, die so ausgelegt ist, daß nach dem Aufstecken der Antriebseinheit und/oder der Lagereinheit das Gehäuse nach außen luftdicht abgeschlossen ist. Das Gehäuse und das Dosiergerät werdenvon einer Vielkanthohlwelle durchsetzt, die mit Schnellverschluß aus Antrieb und Lagereinheit entnommen und wieder eingesetzt werden kann.

Die modularen Dosiersysteme nach der Erfindung sind so ausgebildet, daß zwei oder mehr Dosiergeräte mit ihren Dosiergehäusen axial so aneinandergereiht werden können, daß die einander zugewandten Seiten der Dosiergeräte sich gegenseitig luftdicht nach außen abschließen, und daß die nebeneinander geschalteten Dosiergeräte durch eine entsprechend lange Vielkantwelle ohne dazwischenliegende Stützlagerung miteinander verbunden werden können, d.h. daß die aneinandergeschalteten Dosiergeräte lediglich an ihren Enden gelagert sind. Eine solche Lagerung wird dadurch erreicht, daß die Antriebseinheit auf einer Seite und eine Lagereinheit auf der anderen Seite so ausgebildet und angeordnet sind, daß dsie jeweils von außen auf das Gehäuse aufsteckbar und aufgesteckt verriegelbar sind.
Des weiteren sind die modularen Dosiergeräte aufgrund ihrer völlig symmetrischen Anordnung so ausgelegt, daß Antriebseinheit auf einer Seite und Lagereinheit auf der anderen Seite beliebig austauschbar sind. Ferner ist es möglich, zwei Dosiergeräte, deren jedes eine Antriebs- und eine Lagereinheit aufweist, so miteinander zu verbinden, daß die beiden unmittelbar aneinander anschließenden Lagereinheiten mit ihren Stirnseiten aneinander anstehen, während auf den Außenseiten jeweils eine Antriebseinheit vorgesehen ist.

Die Drehrichtung des Antriebs wird vorzugsweise elektronisch vorgegeben, so daß beim Anstecken des Antriebs die jeweilige Drehrichtung festgelegt ist. Ein Reversieren der Drehrichtung kann ggf. von außen geschaltet werden. Die Dosiergeräte bzw. die Dosiergehäuse weisen vorzugsweise auf ihrer Oberseite und Unterseite Schnellverbindungsvorrichtungen auf, damit sie auf einfache und schnelle Weise aus der Sämaschine herausgenommen und wieder eingesetzt werden können, also ein Wechsel in kürzester Zeit erfolgen kann.

In weiterer Ausgestaltung der Erfindung wird vorgeschlagen, zwischen Saatguttank und Dosiergeräten ein auswechselbares Adapterbauteil anzuordnen, das die Zuführung des Saatgutstromes bzw. Granulatstromes auf eine beliebige Anordnung von Dosiergeräten ermöglicht. Das Adapterteil ist dabei so ausgebildet, daß es den Saatgutstrom auf nur ein Dosiergerät (in Längs- oder Querrichtung angeordnet), oder auf mehrere Dosiergeräte nebeneinander und/oder mehrere Dosiergeräte hintereinander vornehmen kann, wobei dieses auswechselbare Adapterteil konstruktiv so ausgebildet ist, daß es den Trichterstumpf nach unten so zusammenführt, daß eine bestimmte Anzahl von Dosiergeräten beschickt werden können, und ein vollständiges Auslaufen aus dem Trichter sichergestellt ist.

Das Abführen des Granulats bzw. Saatgutes aus den Dosiergeräten wird beispielsweise dadurch gesteuert, daß unter den Dosiergeräten Einführschleusen vorgesehen sind, die das Saatgut bzw. Granulat entweder mittig in unterhalb der Dosiergeräte angeordnete Schläuche oder seitlich versetzt längs oder quer zu den Dosiergeräten weitergeführt wird. Diese Einfuhrschleusen sind konstruktiv als Führungs- oder Fortleitungsvorrichtungen, z.B. Rohre, ausgebildet, die ganzflächig das dosierte Granulat unterhalb des Dosiergerätes aufnehmen.

Anstelle eines elektrischen Antriebes als Antriebseinheit kann die Antriebseinheit auch mechanisch über Vorgelege, Zahnriemen oder dergl. und Zahnrad angetrieben sein, wobei das antreibende Zahnrad auf die Vielkantwelle aufgesetzt wird, die im Betriebszustand aus dem Gehäuse vorsteht.

Nachstehend wird die Erfindung in Verbindung mit der Zeichnung anhand von Ausführungsbeispielen erläutert. Es zeigt:
- Fig. 1: eine schematische Darstellung einer überbreiten Sämaschine,
- Fig. 2: eine schematische Darstellung, teilweise im Schnitt, eines Dosiergerätes nach der Erfindung,
- Fig. 3: ein Dosiergerät nach der Erfindung mit Antriebseinheit und Lagereinheit, jeweils getrennt vom Dosiergerät dargestellt,
- Fig. 4: eine Antriebseinheit mit der Dosiergerätewelle gekoppelt,
- Fig. 5: eine Einheit aus drei Dosiergeräten, miteinander direkt gekoppelt,
- Fig. 6: ein Dosiergerätepaar mit beidseitigem Antrieb,
- Fig. 7: ein Adapterbauteil für ein Dosiergerät,
- Fig. 8: ein Adapterbauteil für zwei Dosiergeräte,
- Fig. 9: eine Einführschleuse für ein Dosiergerät,
- Fig. 10: eine Ausführungsform eines Dosiergerätes mit eingesetztem Antriebs- und Lager teil,
- Fig. 11: eine Ausführungsform eines mechanischen Antriebs eines Dosiergerätes, und
- Fig. 12 - 15: eine spezielle Ausführungsform eines Dosiergerätes nach der Erfindung,
wobei
- Fig. 12: eine Stirnansicht,

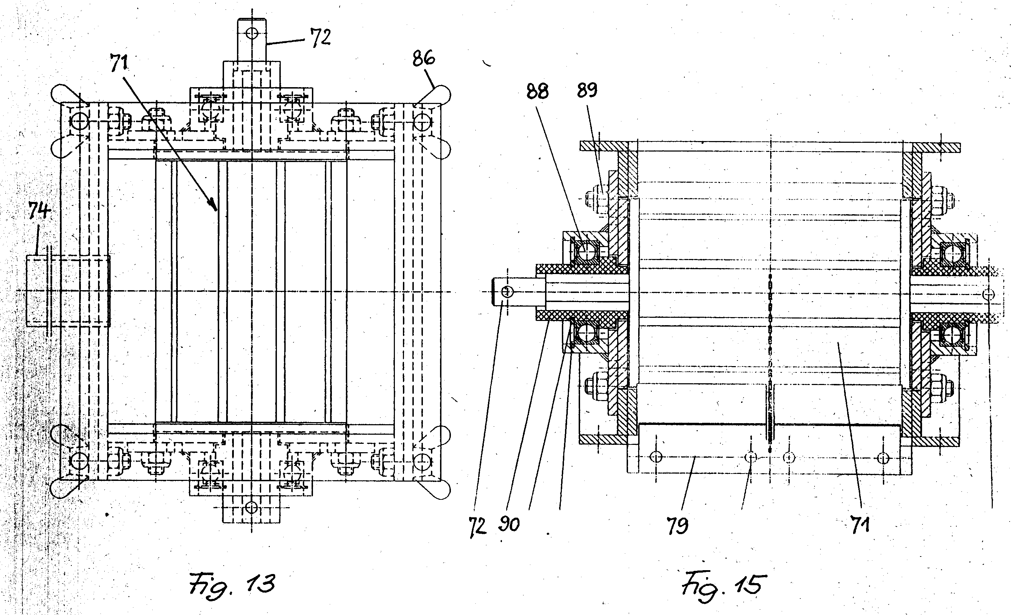

- Fig. 13: eine Aufsicht,
- Fig. 14: eine Seitenansicht, und
- Fig. 15: eine Schnitt-Seitenansicht ein und desselben Gerätes darstellt.

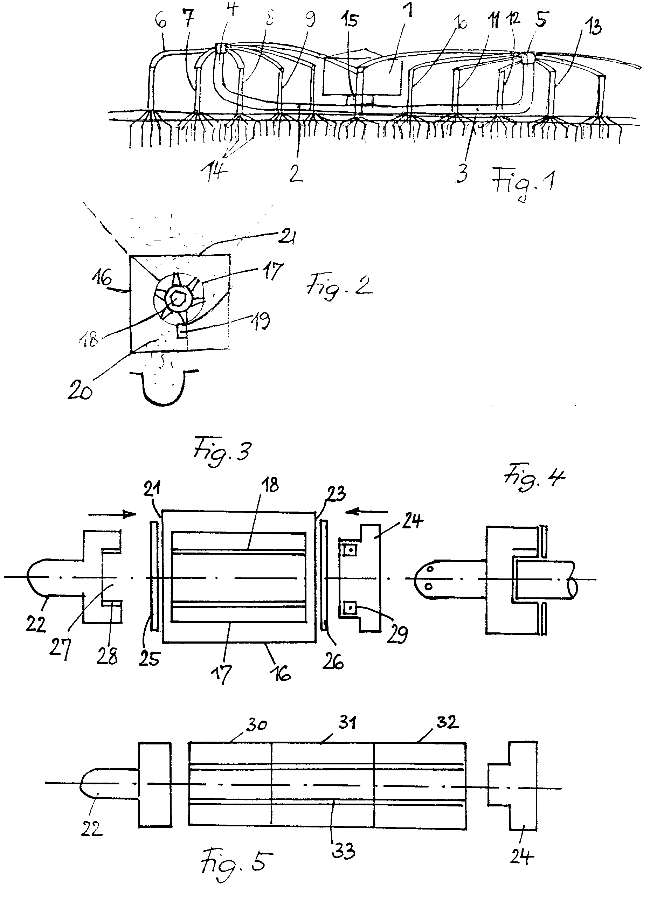

In der schematischen Darstellung nach Fig. 1 ist eine überbreite Sämaschine dargestellt, die einen Saatguttank 1, Hauptsaatgutleitungen 2 und 3 zu Verteilern 4, 5 sowie von dort ausgehende Verteilerleitungen 6 - 13 aufweist, von denen das Saatgut an die Saatgutzuleitungen 14 zu den Säscharen und zur Ablage in den Boden abgegeben wird. Das Dosiersystem ist hierbei mit 15 angedeutet, von dem die Hauptverteilerschläuche bzw. -rohre bzw. -rohrsysteme 2, 3 ausgehen.

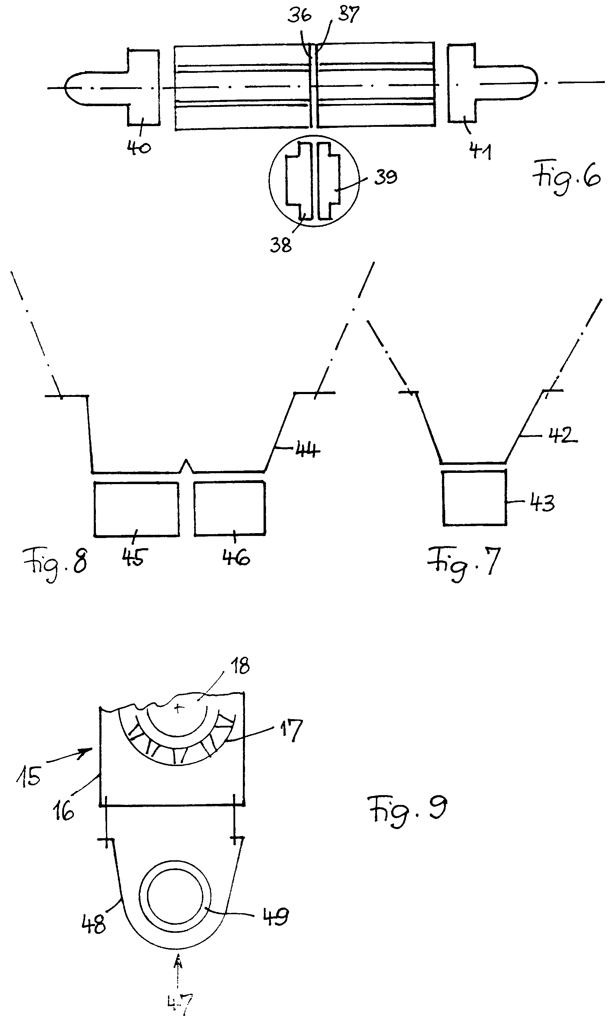

In Fig. 2 ist das Dosiergehäuse mit 16 dargestellt, 17 ist das Zellenrad bzw. die Zellenradanordnung, 18 die Welle des Zellenrades, 19 ein Abstreifer am äußeren Umfang des Zellenrades, 20 das vom Zellenrad und Abstreifer abgegebene granulatförmige Material, insbes. Saatgut.

Bei der Explosionsdarstellung nach Fig. 3 ist das Zellenrad 17 im Gehäuse 16 mit der durchgehenden Welle 18 aufgeschnitten dargestellt. Der Stirnseite 21 des Gehäuses 16 ist eine Antriebseinheit 22 und der gegenüberliegenden Stirnseite 23 des Gehäuses 16 ist eine Lagereinheit 24 zugeordnet. Beide Einheiten 22 und 24 weisen jeweils eine Dichtung 25, 26 auf, die beim Ankoppeln des Antriebs 22 bzw. der Lagereinheit 24 mit der Welle 18 das Innere des Gehäuses 16 bzw. Dosiergerätes luftdicht nach außen abschließt. Die Antriebseinheit 22 weist zur Aufnahme der Welle 18 eine Ausnehmung 27 mit Steckvorrichtung 28 auf, sie wird auf die Welle 18 aufgesteckt und ist damit mit der Welle verbunden. Die Lagereinheit 24 ist mit einer axial äußeren Abschlußplatte 27 und einer axial inneren Verlängerung 28, die die eigentlichen Lager 29 aufnimmt, versehen. Die Lagereinheit 24 ist ebenfalls steckbar und wird auf die Welle 18 so aufgesetzt, daß die Welle bei diesem Aufsetz- und Verriegelungsvorgang von den Lagern 29 abgestützt wird. Fig. 4 zeigt die Antriebseinheit 22 mit der Welle 18 verbunden. Die Welle 18 ist eine Vielkantwelle, z.B. eine Sechskantwelle, die beim Aufstecken mit der Steckvorrichtung 28 der Antriebseinheit verriegelt.

Fig. 5 zeigt ein Dosiersystem,das aus drei nebeneinander angeordneten und unmittelbar und ohne Abstand miteinander verbundenen Dosiergeräten 30, 31, 32 besteht, die auf einer gemeinsamen Vielkantwelle 33 aufgesetzt sind. Die Welle 33 und damit die einzelnen Dosiergeräte 30 - 32 sind lediglich an den Enden über die Steckverbindung mit dem Antrieb 22 bzw. auf der anderen Seite mit der Stecklagereinheit 24 abgestützt, eine Abstützung an den Anschlußstellen der Dosiergeräte miteinander ist hierbei nicht vorhanden. Der Antrieb 22 ist so ausgelegt, daß er ein stufenloser Antrieb ist, der reversierbar ist und der weder eine mechanische Kardanverbindung noch ein Getriebe hat, somit eine Übersetzung in den Antrieb integriert ist.

Bei der Ausführungsform nach Fig. 6 sind zwei Dosiergeräte 34, 35 so miteinander gekoppelt dargestellt, daß ihre lagerseitigen Endflächen 36, 37 aneinander abdichtend anschließen und die endseitigen Lagereinheiten 38, 39 miteinander fest verbunden sind. Die Antriebseinheiten 40, 41 sind auf die Dosiergeräte 34, 35 an den freien Enden aufgesteckt. Diese Anordnung läßt sich in der Weise multiplizieren, daß eine beliebige Anzahl von Paaren von Dosiergeräten nebeneinander angeordnet sind, daß diese Dosiergeräte über ihre Lagereinheiten jeweils miteinander gekoppelt sind, und daß Antriebseinheiten jeweils nur außen, also zwei Antriebseinheiten insgesamt, vorgesehen sind.

Fig. 7 zeigt ein Adapterbauteil 42, das zwischen Sätank T und Dosiergerät 43 angeordnet ist und das die Zuführung des Saatgutstromes vom Saatguttank zu dem Dosiergerät steuert. Das Adapterbauteil 42 ist auswechselbar und durch ein anderes Adapterbauteil, z.B. 44 nach Fig. 8 ersetzbar, das zwei Dosiergeräten 45, 46 zugeordnet ist. Grundsätzlich ist das Adapterbauteil ein Verteiler zwischen Tankboden und Dosiergerät, um das Zuführen des Saatgutstromes auf z.B. ein Dosiergerät längs oder quer, auf mehrere nebeneinander geschaltete Dosiergeräte, auf mehrere hintereinander geschaltete Dosiergeräte oder auf mehrere neben- und hintereinander geschaltete Dosiergeräte vornehmen zu können, um die Steuerung des Saatgutstromes den jeweiligen Bedingungen einwandfrei anpassen zu können, wobei jeweils lediglich eine Auswechslung des Adapterbauteies 42 bzw. 44 erforderlich ist.

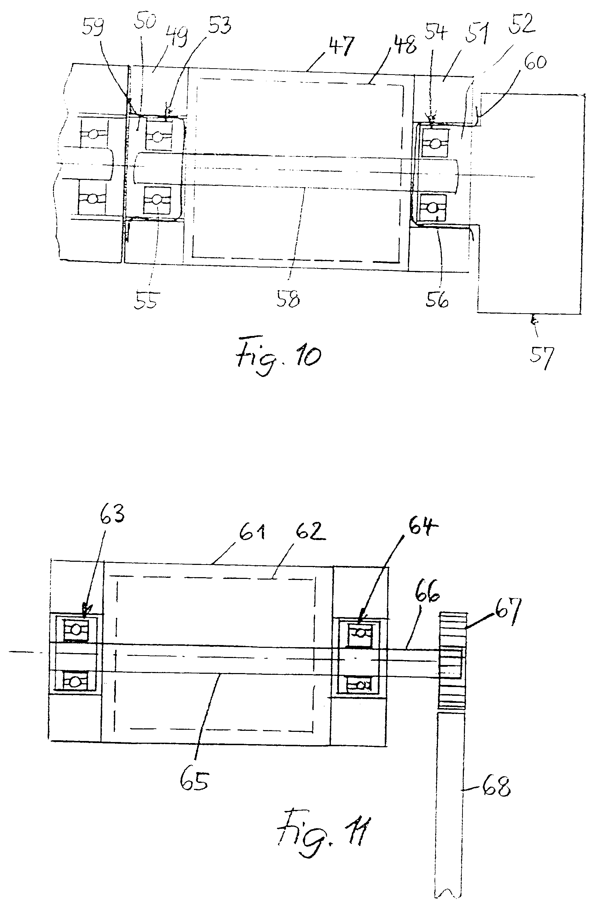

Die Einführschleuse 47 nach Fig. 9, die unterhalb des Dosiergerätes 15 angeordnet ist, besteht aus einem oben erweiterten und unten verengten Gehäuseteil 48, das den Granulatstrom 20 aus dem Dosiergerät aufnimmt. Das Granulat 20 gelangt dabei in verteilerartige Schleusen 49, die unterhalb des Dosiergerätes in ihrer Zuordnung verstellbar sind, so daß das Saatgut wahlweise mittig unterhalb der Dosiergeräte in die dafür vorgesehenen Schläuche, oder aber seitlich längs bzw. quer zu den Dosiergeräten angeordnet werden kann.

Bei der Ausführungsform nach Fig. 10 ist das Dosiergerät mit 47, das Zellenrad mit 48, die beiden Seitenschalen des Gehäuses mit 49, 50 sowie 51, 52 dargestellt. 50 und 52 sind die Ausnehmungen der Gehäuseseitenwände 49 und 51, die die Lagereinheiten 53 und 54 aufnehmen. Mit 55 und 56 sind die Lagerelemente bezeichnet. 57 ist die Antriebseinheit, mit der die Lagerstelle 54 integriert ist. Die Lager 55 und 56 nehmen die Welle 58, vorzugsweise eine Vielkantwelle auf, die in eingesetztem Zustand mit dem Gehäuse 47 steckbar verbunden bzw. verriegelt ist. Die in zusammengebautem Zustand aktivierten Dichtungen 59 und 60 bilden eine luftdichte Abdichtung des Innenraumes des Dosiergerätes nach außen.

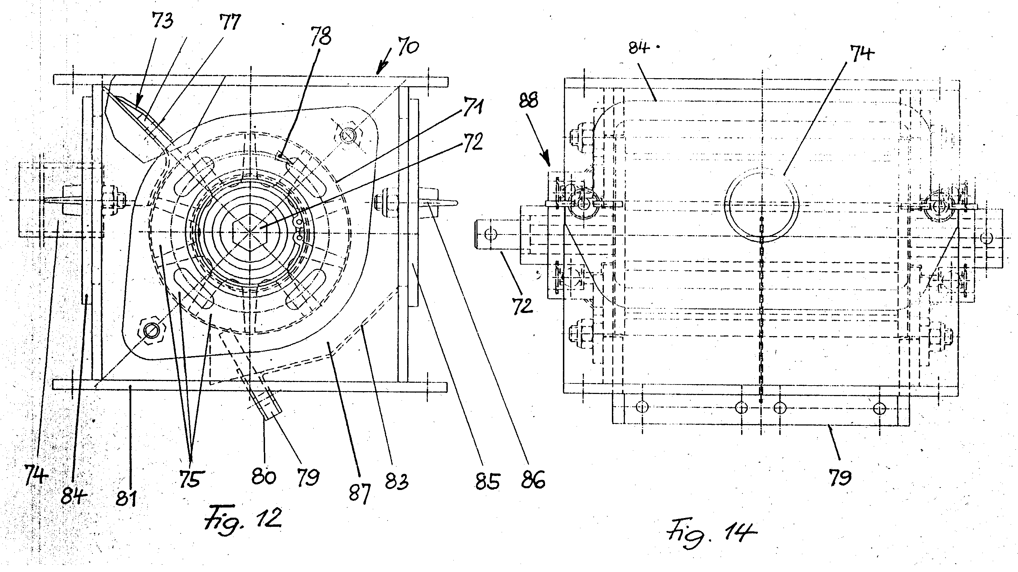

In Fig. 11 ist die Ausführungsform eines Dosiergerätes 61 mit mechanischem Antrieb dargestellt. Das Dosiergerät 61 nimmt das Zellenrad 62 über Lagerungen 63, 64 und die in den Lagern gelagerte Welle 65 auf, mit deren Wellenstummel 66 am einen Ende ein Zahnrad 67 befestigt ist, das über ein Vorgelege oder einen Zahnriemen 68 angetrieben ist.

Analog der schematischen Prinzipzeichnung nach Fig. 2 ist in den Figuren 12 - 15 das Dosiergehäuse 70 mit Zellenrad 71, Zellenradwelle 72 und Granulatzuleitung 73 dargestellt. Die Anschlußverbindung des Gerätes zum Sätank, von dem das granulatförmige Material z.B. durch pneumatische Druckaufgabe in das Gerät eingeführt wird, ist mit 74 bezeichnet. Die Zellen 75 des Zellenrades 71 nehmen Granulat über den Granulateinlauf 73 auf, und eine Gleitlippe 77 streift Granulat am Umfang des Zellenrades ab. Das in den Zellen aufgenommene Granulat wird in Drehrichtung des Pfeiles 78 weiterbefördert und gelangt an der Abgabeposition in Eingriff mit einer Abstreiferlippe 79, die mittels Gegenhalter 80 Granulat an den Zellenöffnungen abstreift und damit das Granulat dosiert über eine Öffnung 81 im Gehäuseboden 82 nach unten abgibt. Mit 83 ist ein Führungsblech für das Granulat gezeigt. 84 und 85 sind Abdeckplatten am Dosiergehäuse 70, die mittels Schraubverbindungen 86 (Flügelschrauben) Öffnungen im Dosiergehäuse verschließen, über die der Innenraum zugänglich ist. Mit 87 ist eine Flanschplatte bezeichnet, die an der Gehäusewand befestigt ist und die eine Lagereinheit 88 für das Zellenrad aufnimmt. Diese Flanschplatte kann einseitig am Gehäuse befestigt sein, sie kann aber auch zweiseitig ausgebildet sein. Mit 89 sind Spannschrauben bezeichnet, die das Zellenrad in axialer Richtung verspannen. 90 bezeichnet eine Muffe, auf der die Lagereinheit 88 angeordnet ist.

## Patentansprüche

1. Sävorrichtung zum dosierten Ausbringen von Saatgut unterschiedlicher Größe und Art, Dünger, chemischen Granulaten, etc. mit mindestens einem Dosiergerät (15, 30 - 32, 34, 35, 43, 45, 46, 47, 61) mit Zellenrad (17, 48, 62, 71), das in einem Gehäuse (16, 47, 70) angeordnet ist, und mit einem Druckluftantrieb, der das aus dem Zellenrad abgegebene Granulat auf pneumatischem Wege über Zuführleitungen in die Verteilerleitungen zu den Dünger- bzw. Granulatauslässen transportiert,
**dadurch gekennzeichnet**, daß
a) das Dosiergerät (15, 30 - 32, 34, 35, 43, 45, 46, 47, 61) ein oder mehrere auswechselbare Zellenräder (17, 48, 62, 71) aufweist,
b) das das Zellenrad aufnehmende Gehäuse (16, 47, 70) des Dosiergerätes in axialer Richtung auf beiden entgegengesetzten Stirnseiten symmetrisch in bezug auf die Anbringung des Antriebs, der Lagerung, des Zusammenstellens des Dosiergerätes und der Befestigung ausgebildet ist und eine herausnehmbare Welle (18, 33, 65), insbes. eine Vielkantwelle, aufweist,
c) das Gehäuse lagerfrei ausgebildet und mit ihm mindestens eine Antriebseinheit (22, 40, 41, 57) mit Lagerung (29, 55, 56, 63, 64) und/oder mindestens eine Lagereinheit (24, 38, 39, 53, 54) gekoppelt ist,
d) die als Steckwelle (28) ausgebildete Welle in der (den) Antriebs- und/oder Lagereinheit(en) gelagert ist, und
e) die Antriebs- und/oder Lagereinheit(en) auf das Gehäuse aufsteckbar oder aufschraubbar ausgebildet ist (sind).

2. Sävorrichtung nach Anspruch 1, dadurch gekennzeichnet, daß Antriebseinheit und/oder Lagereinheit mittels Schnellverschluß auf das Dosiergehäuse des Dosiergerätes aufsteckbar ausgebildet sind.

3. Sävorrichtung nach Anspruch 1 oder 2, dadurch gekennzeichnet, daß Antriebsvorrichtung und Lagereinheit auf entgegengesetzten Seiten des Dosiergerätes angeordnet sind, und daß sowohl die Antriebseinheit als die Lagereinheit auf der dem Dosiergehäuse zugewandten Seite eine Dichtvorrichtung aufweist, die so ausgebildet sind, daß sie in aufgestecktem Zustand von Antriebs- und Lagereinheit das Gehäuse nach außen luftdicht abschließen.

4. Vorrichtung nach einem der Ansprüche 1 - 3, dadurch gekennzeichnet, daß mindestens zwei Dosiergeräte axial aneinander gesetzt, nach außen gegeneinander luftdicht abgeschlossen und auf einer Welle, insbes. Vielkantwelle, ohne zwischengeschaltete Stützlagerung miteinander verbunden sind, derart, daß die Antriebseinheit auf einer Seite und die Lagereinheit auf der anderen Seite der nebeneinander geschalteten Dosiergeräte angeordnet und mit der durchgehenden Welle verbunden sind.

5. Vorrichtung nach einem der Ansprüche 1 - 3, dadurch gekennzeichnet, daß zwei oder mehr Dosiergeräte mit stirnseitig jeweils eingesetzten, unmittelbar aneinander anschließenden Lagereinheiten vorgesehen sind, und daß an den beiden äußeren Stirnseiten jeweils eine Antriebseinheit mit den zugeordneten Dosiergeräten verbunden ist.

6. Vorrichtung nach Anspruch 1, dadurch gekennzeichnet, daß zwischen Saatguttank und Dosiergeräten ein oder mehrere auswechselbare, z.B. paarweise parallel gehaltene Adapterteile vorgesehen ist, die die Zuführung des Saatgutstromes auf ein oder mehrere Dosiergeräte in wählbarer Zuordnung der Dosiergeräte aufweisen.

7. Vorrichtung nach Anspruch 1 oder einem der nachfolgenden, dadurch gekennzeichnet, daß unterhalb der Dosiergeräte Einführschleusen vorgesehen sind, die das von den Dosiergeräten abgegebene Granulat verteilen.

8. Vorrichtung nach Anspruch 1 oder einem der nachfolgenden, dadurch gekennzeichnet, daß das modulare Dosiersystem computergesteuert arbeitet und ein teilflächenbezogenes Zuordnen von vorprogrammierten unterschiedlichen Mengen an Granulaten, beispielsweise im Rahmen einer Satellitensteuerung, ermöglicht.

## Claims

1. Seeder for the proportioned application of seed of different size and type, fertilizer, chemical granular materials, etc., with at least one proportioning device (15, 30, 32, 34, 35, 43, 45, 46, 47, 61) with a bucket wheel (17, 48, 62, 71), which is placed in a casing (16, 47, 70), and with a compressed air drive, which conveys the granular material delivered from the bucket wheel pneumatically, via feed lines into the distributor lines to the fertilizer or granular material outlets, characterized in that
a) the proportioning device (15, 30-32, 34, 35, 43, 45, 46, 47, 61) has one or more replaceable bucket wheels (17, 48, 62, 71),
b) the proportioning device casing (16, 47, 70) receiving the bucket wheel in the axial direction on both opposite end faces is constructed symmetrically with respect to the mounting of the drive, the bearing, the assembly of the proportioning device and the fastening and has a removable shaft (18, 33, 65), particularly a polygonal shaft,
c) the casing is constructed in bearing-free manner and to it is coupled at least one drive unit (22, 40, 41, 57) with a bearing (29, 55, 56, 63, 64) and/or at least one bearing unit (24, 38, 39, 53, 54),
d) the shaft constructed as a stub shaft (28) is mounted in the drive and/or bearing unit or units and
e) the drive and/or bearing unit or units can be fitted or screwed on the casing.

2. Seeder according to claim 1, characterized in that the drive unit and/or bearing unit can be fitted by means of a snap closure to the proportioning casing of the proportioning device.

3. Seeder according to claim 1 or 2, characterized in that the drive unit and bearing unit are placed on opposite sides of the proportioning device and that both the drive unit and the bearing unit has on the side facing the proportioning casing a sealing device constructed in such a way that, with the drive and bearing unit fitted, it seals in airtight manner to the outside the said casing.

4. Seeder according to one of the claims 1 to 3, characterized in that at least two proportioning devices are engaged axially against one another, are mutually sealed to the outside in airtight manner and are interconnected on a shaft, particularly a polygonal shaft, without an interposed step bearing, in such a way that the drive unit is placed on one side and the bearing unit on the other side of the juxtaposed connected proportioning devices and are connected to the through shaft.

5. Seeder according to one of the claims 1 to 3, characterized in that there are two or more proportioning devices with frontally introduced, directly linked bearing units and that on the two outer end faces in each case a drive unit is connected to the associated proportioning devices.

6. Seeder according to claim 1, characterized in that between the seed tank and the proportioning devices is provided one or more replaceable, e.g. pairwise parallel adaptor parts, which provide for the supply of the seed flow to one or more proportioning devices in a selectable association of the proportioning devices.

7. Seeder according to claim 1 or one of the following claims, characterized in that below the proportioning devices are provided introduction locks, which distribute the granular material delivered by the proportioning devices.

8. Seeder according to claim 1 or one of the following claims, characterized in that the modular proportioning system functions in computer-controlled manner and permits a partial surface-related association of preprogrammed, different granular material quantities, e.g. within the framework of a satellite control.

## Revendications

1. Dispositif de semis destiné à l'épandage dosé de semences de différentes grosseurs et de différents types, d'engrais, de granulés chimiques, etc. constitué d'au moins un doseur (15, 30-32, 34, 35, 43, 45, 46, 47, 61) composé d'une roue à palettes (17, 48, 62, 71) logée dans un boîtier (16, 47, 70) et d'un entraînement pneumatique qui transporte, par voie pneumatique, la matière granuleuse débitée par la roue à palettes via des conduites d'alimentation dans les conduites de distribution vers les sorties d'engrais ou de matière granuleuse, caractérisé en ce que
a) le doseur (15, 30-32, 34, 35, 43, 45, 46, 47, 61) est composé d'une ou de plusieurs roues à palettes (17, 48, 62, 71) interchangeables;
b) le boîtier (16, 47, 70) de doseur recevant la roue à palettes est monté, dans la direction axiale, des deux côtés frontaux opposés, de façon symétrique par rapport à l'installation de l'entraînement, au logement et au montage du doseur et à la fixation et en ce qu'il comporte un arbre démontable (18, 33, 65), plus particulièrement un arbre cannelé à faces multiples;
c) en ce que le boîtier est monté sans palier et en ce que au moins une unité d'entraînement (22, 40, 41, 57) avec palier (29, 38, 39, 53, 54) et/ou au moins un support de palier (24, 38, 39, 53, 54) est accouplé à ce boîtier;
d) l'arbre conçu comme un arbre de connexion (28) est monté dans la ou les unité(s) d'entraînement et/ou le ou les support(s) de palier, et
e) la ou les unité(s) d'entraînement et/ou le ou les supports de palier sont conçus de manière à pouvoir être emboîtés ou vissés sur le boîtier.

2. Dispositif de semis suivant la revendication 1, caractérisé en ce que l'unité d'entraînement et/ou le support de palier sont conçus de manière à pouvoir être emboîtés sur le boîtier de dosage du doseur au moyen d'un accouplement rapide.

3. Dispositif de semis suivant la revendication 1 ou 2, caractérisé en ce que le dispositif d'entraînement et le support de palier sont disposés de part et d'autre du doseur et en ce que aussi bien l'unité d'entraînement que le support de palier présentent du côté tourné vers le boîtier de doseur un dispositif d'étanchéité conçu de manière à ce que à l'état emboîté de l'unité d'entraînement et du support de palier le boîtier soit imperméable à l'air extérieur.

4. Dispositif suivant l'une quelconque des revendications 1 à 3, caractérisé en ce qu'au moins deux doseurs sont disposés l'un à côté de l'autre dans le sens axial, sont imperméables à l'air extérieur et sont reliés l'un à l'autre sur un arbre, plus particulièrement un arbre cannelé à faces multiples sans appui intermédiaire, de telle sorte que l'unité d'entraînement soit disposée d'un côté des doseurs disposés l'un à côté de l'autre et le support de palier de l'autre côté de ceux-ci et que l'unité d'entraînement et le support de palier soient reliés par l'arbre traversant.

5. Dispositif suivant l'une quelconque des revendications 1 à 3, caractérisé en ce que deux ou plus de deux doseurs sont prévus avec des supports de palier disposés sur leur côté frontal en juxtaposition et en ce que à chaque côté frontal extérieur une unité d'entraînement est reliée au doseur associé.

6. Dispositif suivant la revendication 1, caractérisé en ce que entre le réservoir à semences et les doseurs sont prévues une ou plusieurs pièces de raccord interchangeables, par exemple maintenues parallèles deux à deux, qui présentent l'alimentation du flux de semences sur un ou plusieurs doseurs suivant une affectation sélective des doseurs.

7. Dispositif suivant la revendication 1 ou suivant l'une quelconque des revendications suivantes, caractérisé en ce que des sas d'entrée sont prévus en dessous des doseurs et répartissent la matière granuleuse débitée par les doseurs.

8. Dispositif suivant la revendication 1 ou suivant l'une quelconque des revendications suivantes, caractérisé en ce que le système de dosage modulaire est commandé par ordinateur et permet une affectation suivant la surface primitive de référence des différentes quantités de matière granuleuse préprogrammées, par exemple dans le cadre d'une commande par satellite.
